# FASCICULE DE BREVET EUROPEEN

(11) **EP 3 354 859 B1**
(45) Date de publication et mention de la délivrance du brevet: **17.04.2019**
(21) Numéro de dépôt: 18151675.8
(22) Date de dépôt: 15.01.2018
(51) Int. Cl.: F01D 11/24, F02C 7/14, F01D 25/12, F01D 11/12

(54) **SYSTÈME DE CONTROLE ACTIF DE JEU RADIAL DE TURBOMACHINE ET TURBOMACHINE ASSOCIÉE**
AKTIVES STEUERUNGSSYSTEM FÜR DAS RADIALE SPIEL EINER STRÖMUNGSMASCHINE UND ZUGEHÖRIGE STRÖMUNGSMASCHINE
ACTIVE CONTROL SYSTEM FOR THE RADIAL GAP OF A TURBOMACHINE AND CORRESPONDING TURBOMACHINE

(30) Priorité: 26.01.2017 BE 201705050
(43) Date de publication de la demande: 01.08.2018
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A1- 1 717 419
- US-A1- 2010 178 161

## Description

### Domaine technique

L'invention se rapporte au domaine de l'étanchéité dynamique autour d'un rotor de turbomachine. Plus précisément, l'invention concerne un système de contrôle actif de jeu radial autour d'une rangée annulaire d'aubes rotoriques. L'invention a également trait à une turbomachine axiale, notamment un turboréacteur d'avion ou un turbopropulseur d'aéronef.

### Technique antérieure

En fonctionnement, l'effet de la force centrifuge augmente le diamètre externe des roues aubagées de turboréacteur. Cette variation de géométrie influe sur le jeu radial que ces roues définissent en combinaison avec le carter externe les entourant. Afin de piloter le jeu résultant en phase de fonctionnement, le carter externe est dilaté volontairement.

Le document US 2010/0178161 A1 divulgue une turbomachine comprenant un compresseur avec un carter externe autour d'aubes de rotor, et des paliers lubrifiés par de l'huile au contact de ces paliers. Puisque l'huile chauffe au contact des paliers, l'huile peut être utilisée pour piloter la dilatation du carter autour des aubes. Par ce biais, le jeu radial entre le carter et les aubes peut être adapté précisément malgré la force centrifuge qui augmente le diamètre externe de la rangée annulaire d'aubes. La pression en sortie de compresseur parvient à augmenter. Néanmoins, la variation de géométrie du carter reste imprécise si bien que les aubes de stator se déplacent de manière incontrôlée.

### Résumé de l'invention

### Problème technique

L'invention a pour objectif de résoudre au moins un des problèmes posés par l'art antérieur. Plus précisément, l'invention a pour objectif d'améliorer la pression de sortie d'un compresseur équipé d'un système de dilatation actif. L'invention a également pour objectif de proposer une solution simple, résistante, légère, économique, fiable, facile à produire, commode d'entretien, d'inspection aisée, améliorant le rendement, et diminuant le flux d'huile nécessaire.

### Solution technique

L'invention a pour objet un système de contrôle actif de jeu radial de turbomachine, le système comportant : une rangée annulaire d'aubes rotoriques ; un carter externe autour de la rangée d'aubes rotoriques ; un jeu radial entre les aubes rotoriques et le carter externe ; et un circuit d' huile adapté pour récupérer les calories d'un équipement de la turbomachine comprenant un module de dilatation configuré pour déformer le carter externe grâce aux calories récupérées par l'huile, remarquable en ce que le module de dilatation est disposé à l'intérieur du carter de sorte à adapter le jeu radial.

Selon des modes avantageux de l'invention, le système peut comprendre une ou plusieurs des caractéristiques suivantes, prises isolément ou selon toutes les combinaisons techniques possibles :

Le carter externe comprend une cloison annulaire avec une surface intérieure, le module comprend un anneau de dilatation disposé contre ladite surface intérieure.

Le module est disposé axialement au niveau de la rangée annulaire d'aubes rotoriques.

Le module comprend un matériau métallique.

Le carter comprend un matériau composite à matrice organique, et notamment des fibres de verre et/ou des fibres de carbone.

Le module comprend au moins un conduit ménagé dans son épaisseur radiale.

Le module comprend plusieurs conduits, par exemple au moins quatre ou au moins huit conduits, ménagés dans l'épaisseur radiale du module et répartis axialement le long dudit module.

Chaque conduit s'étend selon la circonférence de la rangée annulaire d'aubes rotoriques.

Le système comprend en outre une couche de matériau abradable adaptée pour coopérer par abrasion avec la rangée d'aubes rotoriques, le module étant disposé radialement entre le carter et la couche d' abradable.

Le carter externe comprend au moins une bride annulaire de fixation à distance axialement du module de dilatation, et éventuellement à distance axialement de la rangée d'aubes rotoriques.

Le module de dilatation comprend un coefficient de dilatation supérieur au module de dilatation du carter.

La réduction comprend un rendement mécanique compris entre 0,99 et 0,95.

La réduction comprend des engrenages.

Le compresseur comprend une pluralité de rangées annulaires d'aubes rotoriques, chaque module étant disposé au droit d'une rangée annulaire d'aubes rotoriques.

Le module s'étend sur une fraction axiale de la virole externe associée, par exemple sur 25% à 75% de la longueur axiale de la virole externe associée.

Le module s'étend sur la majorité ou sur la totalité de la longueur axiale de la rangée annulaire d'aubes rotoriques.

Le ou chaque conduit est à l'intérieur du carter, et/ou de la virole, et/ou de la paroi annulaire associée.

Le module est disposé dans l'épaisseur générale de la cloison de carter externe.

L'invention a également pour objet une turbomachine, notamment un turboréacteur, comprenant une rangée annulaire d'aubes rotoriques et un système de contrôle actif de jeu radial autour des aubes rotoriques, remarquable en ce que le système de contrôle actif est conforme à l' invention, préférentiellement la turbomachine comprend un compresseur, une soufflante, une turbine, une réduction en prise avec le compresseur et/ou avec la soufflante, et au moins un palier tournant.

Selon des modes avantageux de l'invention, la turbomachine peut comprendre une ou plusieurs des caractéristiques suivantes, prises isolément ou selon toutes les combinaisons techniques possibles :

La réduction est adaptée pour convertir au moins : 50kW, ou 100kW, ou 220kW d'énergie mécanique en énergie thermique.

Le compresseur comporte au moins deux rangées d'aubes statoriques entre lesquelles est placée la rangée d'aubes rotoriques, le module de dilatation étant disposé entre les au moins deux rangées d' aubes statoriques, le module étant disposé à distance axialement de chaque rangée annulaire d'aubes statoriques.

Le compresseur comprend une pluralité de rangées annulaires d' aubes statoriques et une pluralité de modules de dilatation disposés par alternance, les modules étant disposés axialement entre les aubes statoriques.

Le carter externe comprend au moins une première virole externe et une deuxième virole externe reliées l'une à l'autre au niveau d'une interface de fixation, au niveau de l'interface, la deuxième virole présente un diamètre intérieure supérieur au diamètre extérieur de la deuxième virole, le module étant disposé axialement à l'intérieur de la deuxième virole.

La réduction est disposée axialement au niveau du compresseur, le compresseur comprend éventuellement un bec de séparation en amont, la réduction étant éventuellement disposée en aval dudit bec de séparation.

Le circuit d'huile lubrifie la réduction et/ou chaque palier tournant.

La réduction est configurée de sorte que la vitesse de rotation du compresseur soit supérieure ou égale au double ou au quadruple de la vitesse de rotation de la soufflante.

La réduction est configurée de sorte que la vitesse de rotation de la turbine soit supérieure ou égale au double de la vitesse de rotation du compresseur.

Le compresseur est un compresseur basse-pression, et la turbine est une turbine basse-pression entraînant en rotation le compresseur basse-pression.

L'invention a également pour objet un système de contrôle actif de jeu radial entre une rangée annulaire d'aubes rotoriques et un carter externe de turbomachine, le système comportant : un circuit refroidissant un équipement de la turbomachine ; ledit circuit comprend un module dilaté par les calories récupérées par le circuit de refroidissement, ledit module de dilatation étant disposé à l'intérieur du carter de sorte à en moduler le diamètre autour de la rangée annulaire d'aubes rotoriques. De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention parvient à piloter le jeu radial entre le carter et les aubes rotoriques qu'il entoure. Ce jeu peut être augmenté temporellement, ou maintenu constant. Cette option permet de réduire les fuites pour différents modes de fonctionnement de la turbomachine, par exemple à bas régime et à haut régime. Dans le contexte d'un turboréacteur d'avion, il devient possible d'optimiser le rendement au décollage, en ascension, et en vol de croisière.

La position du module à l'intérieur du carter permet d'adapter les efforts exercés au contact du carter. Les efforts de tractions peuvent être évités lors de la dilatation, ce qui simplifie l'interface de fixation et augmente la durabilité du système de contrôle de jeu.

En différenciant les matériaux du module et du carter, les modules de dilatation peuvent être adaptés davantage, si bien que le jeu aube-carter peut être piloté plus finement. Ainsi, le rendement du turboréacteur peut être amélioré globalement puisque différents cas de figures sont optimisés.

### Brève description des dessins

La figure 1 représente une turbomachine axiale selon l'invention.
La figure 2 est un schéma d'un compresseur de turbomachine selon l'invention.
La figure 3 illustre un système de contrôle actif de jeu radial pour turbomachine selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

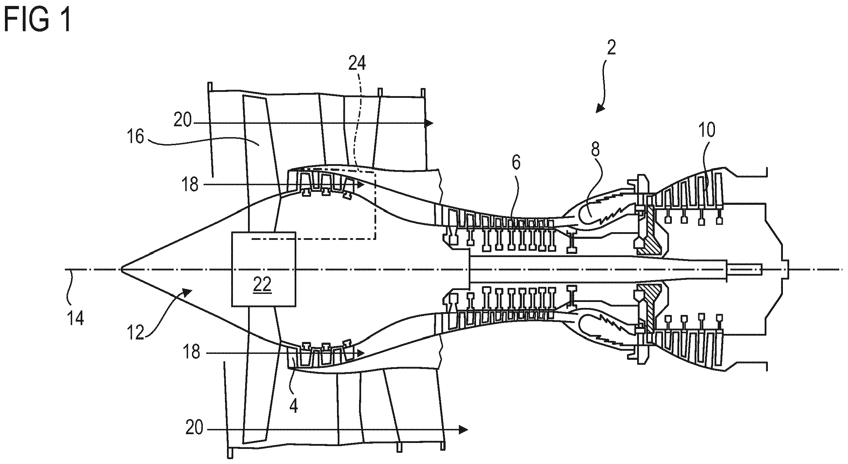

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor 12 autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. Le flux secondaire 20 peut être accéléré par la soufflante 16 de sorte à générer une réaction de poussée permettant le vol d'un aéronef. La soufflante 16 peut être du type non carénée, par exemple à double rotor contrarotatifs, éventuellement en aval du turboréacteur.

Une réduction 22, tel un réducteur épicycloïdal à une entrée et à double sortie, peut réduire la vitesse de rotation de la soufflante 16 et/ou du compresseur basse-pression 4 par rapport à la turbine associée. A titre d'exemple, la turbine basse-pression tourne à 20000tr/min, le compresseur à 10000tr/min, et la soufflante à 2000tr/min. En fonctionnement, la réduction 22 convertit au moins 20kW ou au moins 150kW d'énergie mécanique en énergie thermique. Elle montre un auto échauffement significatif.

La turbomachine 2 est par ailleurs équipée d'un circuit d'huile 24 permettant de lubrifier la réduction 22 et éventuellement les paliers articulant les parties mobiles du rotor 12. Le circuit d'huile 24 permet à la fois de lubrifier et de refroidir la réduction 22, en plus d'apporter des calories au compresseur 4.

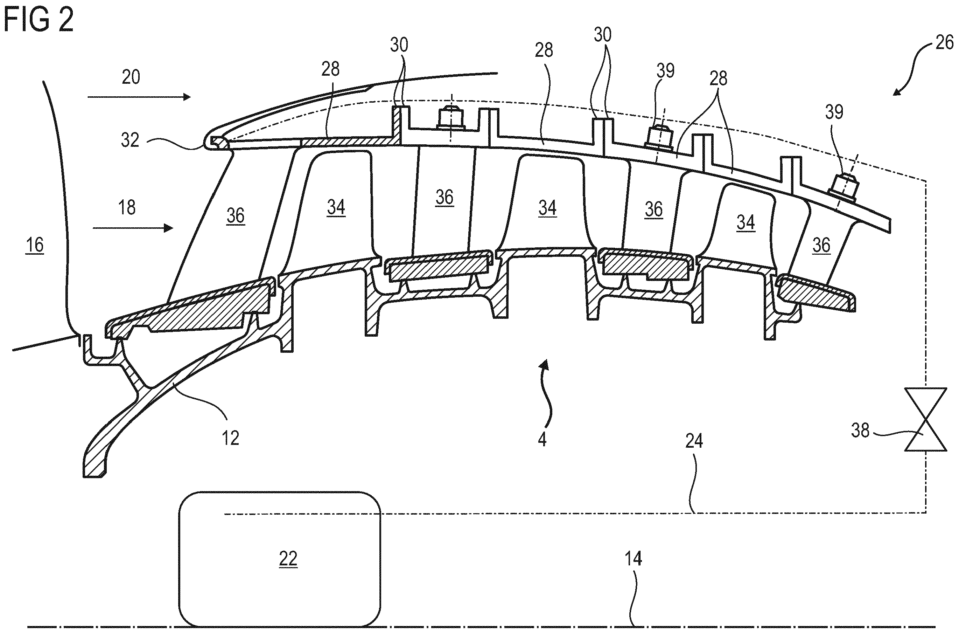

La figure 2 est une vue en coupe d'un compresseur d'une turbomachine axiale telle que celle de la figure 1. Le compresseur 4 peut être un compresseur basse-pression 4. Le compresseur 4 présente un carter 26 formé de viroles externes 28 reliées entre elles par des brides de fixation 30. Alternativement, le carter externe est formé de demi-coquilles angulaires.

On peut observer le bec de séparation 32 du flux primaire 18 et du flux secondaire 20. Le circuit d'huile 24 provenant de la réduction 22 apporte des calories au carter externe 26, notamment à ses viroles 28, et éventuellement au bec de séparation 32. Une vanne 38 permet de piloter l'échange thermique du circuit 24. La vanne 38 peut être régulée par un système de commande de la turbomachine.

Le rotor 12 comprend plusieurs rangées d'aubes rotoriques 34, en l'occurrence trois. Il peut être un tambour monobloc aubagé, ou comprendre des aubes à fixation par queue d'aronde. Il peut être formé de disques.

La réduction 22 peut être une transmission tournant autour de l'axe de rotation 14. Elle peut être disposée dans le rotor 12, par exemple dans le tambour. La réduction 22 peut être placée à l'intérieur du compresseur, au du moins au niveau axialement du compresseur 4. Par exemple, la réduction peut être placée entre le bec de séparation 32 et la sortie du compresseur 4. Selon la configuration, le compresseur peut comprendre un carter support de soufflante intercalé entre le bec de séparation 32 et des viroles du compresseur 4.

Le compresseur basse-pression 4, également appelé booster, comprend plusieurs redresseurs, en l'occurrence quatre, qui contiennent chacun une rangée d'aubes statoriques 36. Les redresseurs sont associés au fan 16 ou à une rangée d'aubes rotoriques pour redresser le flux d'air, de sorte à convertir la vitesse du flux en pression, notamment en pression statique. Les aubes statoriques 36 s'étendent essentiellement radialement depuis le carter externe 26, et peuvent y être fixées et immobilisées à l'aide d'axes 39.

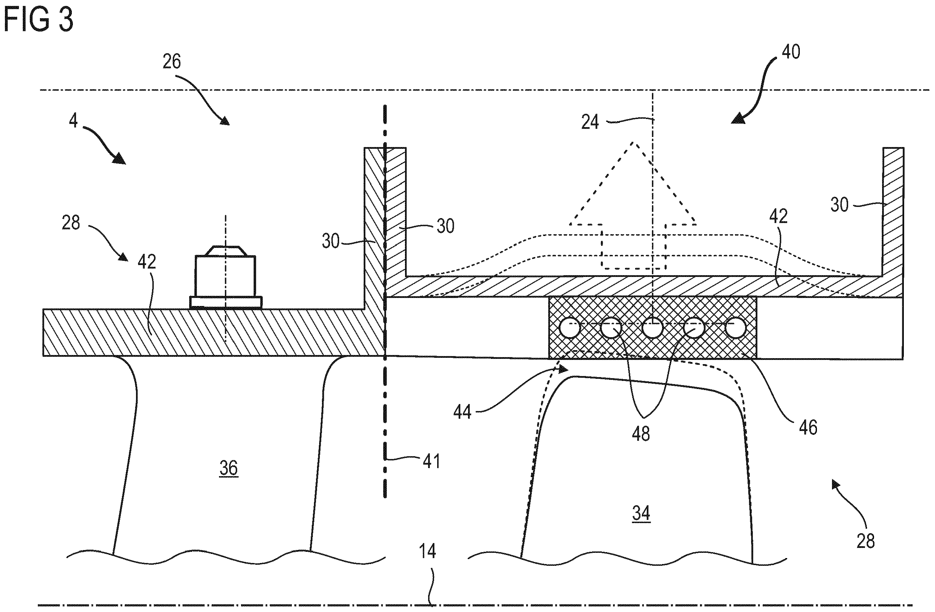

La figure 3 esquisse une portion du compresseur 4 tel que celui illustré en figures 1 et 2. Cette portion reçoit un système de contrôle 40 de jeu radial.

Deux viroles externes 28 sont au droit d'une rangée d'aubes rotoriques 34 et d'une rangée d'aubes statoriques 36. Ces viroles 28 sont liées au niveau d'une interface de fixation 41 où leurs parois annulaires 42 respectives montrent une différence de diamètre interne. En particulier, la paroi 42 autour des aubes rotoriques 34 présente le diamètre interne le plus grand. Par ailleurs, les brides de fixation 30 sont à distance axialement des aubes (34 ; 36).

Les aubes rotoriques 34 sont représentées en trait plein au repos, et en traits pointillés en fonctionnement. La force centrifuge tend à augmenter le diamètre externe de la rangée d'aubes rotoriques 34. Cette déformation les rapproche de leur virole externe 28, éventuellement jusqu'à la toucher. Afin de contrôler le jeu entre les aubes rotoriques 34 et le carter 26, un ou plusieurs modules de dilatation 46 sont associés aux différentes viroles autour des aubes rotoriques 34. Ces modules de dilatation 46 sont connectés au réseau d'huile 24 afin d'en recevoir les calories transportées par l'huile et issues de la réduction.

Lorsque le module 46 reçoit des calories, il se dilate et augmente le diamètre du carter 26. En étant à l'intérieur de sa virole 28, il la pousse depuis l'intérieur. La paroi 42 associée au module 46 est représentée en trait plein au repos, et en trait pointillés lorsque le module apporte de la chaleur. Optionnellement, le module apporte des calories à la virole 28 qui se dilate également. La déformation peut être localisée sur l'ensemble du carter, ou spécifiquement sur une virole externe 28, ou du moins un tronçon axial de virole externe 28. Selon les configurations, les brides 30 peuvent généralement garder un diamètre externe constant, ou augmenter de diamètre en cas d'action thermique du module 46. Dès lors, le jeu 44 peut être modulé.

Le module de dilatation 46 peut comprendre un corps annulaire de matière. Il peut former une ceinture plaquée contre la surface interne de la paroi annulaire 42. Le module 46 peut être parcouru par une pluralité de conduits 48. Chaque conduit 48 est branché au circuit 24 et permet un échange thermique entre l'huile et le matériau du module 46, par exemple un matériau métallique. Le module 46 peut former un échangeur thermique auxiliaire, le circuit 24 pouvant en outre comprendre un échangeur thermique principal (non représenté).

Le matériau du module 46 peut être différent de celui du carter 26, notamment de sa virole 28 d'implantation. Le carter 26, notamment au moins une ou chaque virole 28, peut être réalisé(e) en matériau composite à matrice organique avec des fibres de verre et/ou des fibres de carbone. Le coefficient de dilatation du module est alors supérieur à celui du carter pour amplifier la dilatation.

Le module 46 peut comprendre cinq ou dix conduits 48. Chaque conduit peut s'étende sur la circonférence de la rangée d'aubes rotoriques 34, ou du moins former un arc de cercle autour de l'axe de rotation 14. Le module peut s'étendre sur la majorité axiale de la virole 28 associée. Le module 46 peut être intégré dans l'épaisseur générale de la virole 28 associée. Il peut être placé contre la paroi 42 annulaire présentant le diamètre interne le plus important à l'interface 41, si bien que sa surface interne affleure la surface interne de la virole externe 28 portant les aubes statoriques 36.

Optionnellement, la surface interne du module 46 est recouverte d'une couche de matériau abradable (non représenté). Cette couche est destinée à coopérer par abrasion avec les aubes rotoriques 34. Alternativement, le module 46 est directement en regard des aubes rotoriques. Le module 46 devient alors une séparation entre l'abradable et la paroi 42.

Bien qu'un seul module de dilatation 46 ne soit représenté, il est possible d'en prévoir plusieurs dans le compresseur de la figure 2. Par exemple, ces modules peuvent équiper chaque virole externe 28 autour d'aubes rotoriques 34. Les viroles externes 28 recevant les aubes statoriques 36 peut être libre de tels modules. Dès lors, chaque module de dilatation 46 peut être axialement à distance de chaque aube statorique 36 et éventuellement de leurs viroles externes 28. Les modules 46 peuvent notamment rester à distance des brides de fixation 30 afin de bénéficier de la souplesse des parois 42. Selon une option de l'invention, deux viroles accolées peuvent être fusionnées.

## Revendications

1. Système de contrôle actif (40) de jeu radial (44) de turbomachine (2), le système (40) comportant :
- une rangée annulaire d'aubes rotoriques (34) ;
- un carter externe (26) autour de la rangée d'aubes rotoriques (34) ;
- un jeu radial (44) entre les aubes rotoriques (34) et le carter externe (26); et
- un circuit d'huile (24) adapté pour récupérer les calories d'un équipement de la turbomachine et comprenant un module de dilatation (46) configuré pour déformer le carter externe (26) grâce aux calories récupérées par l'huile, **caractérisé en ce que**
le module de dilatation (46) est disposé à l'intérieur du carter externe (26) de sorte à adapter le jeu radial (44).

2. Système (40) selon la revendication 1, **caractérisé en ce que** le carter externe (26) comprend une cloison annulaire avec une surface intérieure, le module (46) comprend un anneau de dilatation disposé radialement contre ladite surface intérieure.

3. Système (40) selon l'une des revendications 1 à 2, **caractérisé en ce que** le module (46) est disposé axialement au niveau de la rangée annulaire d'aubes rotoriques (34).

4. Système (40) selon l'une des revendications 1 à 3, **caractérisé en ce que** le module (46) comprend un matériau métallique, éventuellement un matériau différent du matériau du carter externe, et/ou le carter externe (26) comprend un matériau composite à matrice organique, et notamment des fibres de verre et/ou des fibres de carbone.

5. Système (40) selon l'une des revendications 1 à 4, **caractérisé en ce que** le module (46) comprend au moins un conduit (48) ménagé dans son épaisseur radiale.

6. Système (40) selon l'une des revendications 1 à 5, **caractérisé en ce que** le module (46) comprend plusieurs conduits (48), par exemple au moins quatre ou au moins huit conduits (48), ménagés dans l'épaisseur radiale du module (46) et répartis axialement le long dudit module (46).

7. Système (40) selon l'une des revendications 5 à 6, **caractérisé en ce que** chaque conduit (48) s'étend selon la circonférence de la rangée annulaire d'aubes rotoriques (34).

8. Système (40) selon l'une des revendications 1 à 7, **caractérisé en ce que** le système comprend en outre une couche de matériau abradable adaptée pour coopérer par abrasion avec la rangée d'aubes rotoriques (34), le module (46) étant disposé radialement entre le carter externe (26) et la couche d'abradable.

9. Système (40) selon l'une des revendications 1 à 8, **caractérisé en ce que** le carter externe (26) comprend au moins une bride annulaire (30) de fixation à distance axialement du module de dilatation (46), et éventuellement à distance axialement de la rangée d'aubes rotoriques (34).

10. Turbomachine (2), notamment un turboréacteur, comprenant une rangée annulaire d'aubes rotoriques (34) et un système de contrôle actif (40) de jeu radial (44) autour des aubes rotoriques (34), **caractérisée en ce que** le système de contrôle actif (40) est conforme à l'une des revendications 1 à 9, préférentiellement la turbomachine (2) comprend un compresseur (4), une soufflante (16), une turbine (10), une réduction (22) en prise avec le compresseur (4) et/ou avec la soufflante (16), et au moins un palier tournant.

11. Turbomachine (2) selon la revendication 10 , **caractérisée en ce que** le compresseur (4) comporte au moins deux rangées d'aubes statoriques (36) entre lesquelles est placée la rangée d'aubes rotoriques (34), le module de dilatation (46) étant disposé entre les au moins deux rangées d'aubes statoriques (36), et/ou le module (46) est disposé à distance axialement de chaque rangée annulaire d'aubes statoriques (36).

12. Turbomachine (2) selon l'une des revendications 10 à 11, **caractérisée en ce que** le carter externe (26) comprend au moins une première virole externe (28) et une deuxième virole externe (28) reliées l'une à l'autre au niveau d'une interface de fixation (41), au niveau de l'interface (41) la deuxième virole (28) présente un diamètre intérieure supérieur au diamètre extérieur de la deuxième virole (28), le module (46) étant disposé axialement à l'intérieur de la deuxième virole (28).

13. Turbomachine (2) selon l'une des revendications 10 à 12, **caractérisée en ce que** la réduction (22) est disposée axialement au niveau du compresseur (4), le compresseur (4) comprend éventuellement un bec de séparation (32) en amont, la réduction (22) étant éventuellement disposée en aval dudit bec de séparation (32).

14. Turbomachine (2) selon l'une des revendications 10 à 13, **caractérisée en ce que** la réduction (22) est configurée de sorte que la vitesse de rotation de la turbine (10) soit supérieure ou égale au double de la vitesse de rotation du compresseur (4).

15. Turbomachine (2) selon l'une des revendications 10 à 14, **caractérisée en ce que** le compresseur (4) est un compresseur basse-pression, et la turbine (10) est une turbine basse-pression entraînant en rotation le compresseur basse-pression.

## Patentansprüche

1. System (40) zur aktiven Steuerung des radialen Spiels (44) in einer Turbomaschine (2), wobei das System (40) umfasst:
- eine ringförmige Reihe von Rotorschaufeln (34);
- ein äußeres Gehäuse (26) um die Reihe von Rotorschaufeln (34) herum;
- ein radiales Spiel (44) zwischen den Rotorschaufeln (34) und dem äußeren Gehäuse (26); und
- einen Ölkreislauf (24), der dafür ausgelegt ist die Kalorien von Turbomaschinenausrüstung rückzugewinnen, und ein Expansionsmodul (46) umfasst, das dafür ausgelegt ist, das äußere Gehäuse (26) mittels der aus dem Öl rückgewonnenen Kalorien zu verformen,
**dadurch gekennzeichnet, dass**
das Expansionsmodul (46) innerhalb des äußeren Gehäuses (26) angeordnet ist, um das radiale Spiel (44) anzupassen.

2. System (40) nach Anspruch 1, **dadurch gekennzeichnet, dass** das äußere Gehäuse (26) eine ringförmige Wand mit einer Innenfläche umfasst, wobei das Modul (46) einen Expansionsring umfasst, der radial gegen diese Innenfläche angeordnet ist.

3. System (40) nach einem der Ansprüche 1 bis 2, **dadurch gekennzeichnet, dass** das Modul (46) axial in Höhe der ringförmigen Reihe von Rotorschaufeln (34) angeordnet ist.

4. System (40) nach einem der Ansprüche 1 bis 3, **dadurch gekennzeichnet, dass** das Modul (46) ein Metallmaterial umfasst, gegebenenfalls ein Material, das von dem Material des äußeren Gehäuses verschieden ist, und/oder dass das äußere Gehäuse (26) einen Verbundwerkstoff mit organischer Matrix und insbesondere Glasfasern und/oder Kohlenstofffasern umfasst.

5. System (40) nach einem der Ansprüche 1 bis 4, **dadurch gekennzeichnet, dass** das Modul (46), innerhalb seiner radialen Dicke, mindestens einen Kanal (48) umfasst.

6. System (40) nach einem der Ansprüche 1 bis 5, **dadurch gekennzeichnet, dass** das Modul (46) mehrere Kanäle (48) beinhaltet, beispielsweise mindestens vier oder mindestens acht Kanäle (48), die in der radialen Dicke des Moduls (46) untergebracht sind und axial entlang des Moduls (46) verteilt sind.

7. System (40) nach einem der Ansprüche 5 bis 6, **dadurch gekennzeichnet, dass** sich jeder Kanal (48) entlang dem Umfang der ringförmigen Reihe von Rotorschaufeln (34) erstreckt.

8. System (40) nach einem der Ansprüche 1 bis 7, **dadurch gekennzeichnet, dass** das System zusätzlich eine Schicht aus Einlaufmaterial beinhaltet, die geeignet ist, um durch Abrieb mit der Reihe von Rotorschaufeln (34) zusammenzuwirken, wobei das Modul (46) radial zwischen dem äußeren Gehäuse (26) und der Einlaufschicht angeordnet ist.

9. System (40) nach einem der Ansprüche 1 bis 8, **dadurch gekennzeichnet, dass** das äußere Gehäuse (26) mindestens einen ringförmigen Befestigungsflansch (30) beinhaltet, der axial von dem Expansionsmodul (46) beabstandet ist und gegebenenfalls von der Reihe von Rotorschaufeln (34) beabstandet ist.

10. Turbomaschine (2), insbesondere ein Turbomotor, umfassend eine ringförmige Reihe von Rotorschaufeln (34) und ein System (40) zur aktiven Steuerung des radialen Spiels (44) um die Rotorschaufeln (34) herum, **dadurch gekennzeichnet, dass** das System (40) zur aktiven Steuerung einem der Ansprüche 1 bis 9 entspricht, die Turbomaschine (2) bevorzugt einen Verdichter (4), einen Fan (16), eine Turbine (10), ein Untersetzungsgetriebe (22) in Eingriff mit dem Verdichter (4) und/oder mit dem Fan (16), und mindestens ein Rotationslager umfasst.

11. Turbomaschine (2) nach Anspruch 10, **dadurch gekennzeichnet, dass** der Verdichter (4) mindestens zwei Reihen von Statorschaufeln (36) umfasst, zwischen welche die Reihe von Rotorschaufeln (34) platziert ist, wobei das Expansionsmodul (46) zwischen den mindestens zwei Reihen von Statorschaufeln (36) angeordnet ist, und/oder wobei das Modul (46) axial von jeder ringförmigen Reihe von Statorschaufeln (36) beabstandet ist.

12. Turbomaschine (2) nach einem der Ansprüche 10 bis 11, **dadurch gekennzeichnet, dass** das äußere Gehäuse (26) mindestens ein erstes äußeres Deckband (28) und ein zweites äußeres Deckband (28) umfasst, die in Höhe einer Befestigungsschnittstelle (41) miteinander verbunden sind, wobei an der Schnittstelle (41) das zweite Deckband (28) einen Innendurchmesser aufweist, der größer als der Außendurchmesser des zweiten Deckbands (28) ist, wobei das Modul (46) axial innerhalb des zweiten Deckbands (28) angeordnet ist.

13. Turbomaschine (2) nach einem der Ansprüche 10 bis 12, **dadurch gekennzeichnet, dass** das Untersetzungsgetriebe (22) axial in Höhe des Verdichters (4) angeordnet ist, wobei der Verdichter (4) gegebenenfalls eine stromaufwärtige Trennnase (32) umfasst, wobei das Untersetzungsgetriebe (22) gegebenenfalls stromabwärts von der Trennnase (32) angeordnet ist.

14. Turbomaschine (2) nach einem der Ansprüche 10 bis 13, **dadurch gekennzeichnet, dass** das Untersetzungsgetriebe (22) so ausgelegt ist, dass die Rotationsgeschwindigkeit der Turbine (10) größer oder gleich zweimal die Rotationsgeschwindigkeit des Verdichters (4) ist.

15. Turbomaschine (2) nach einem der Ansprüche 10 bis 14, **dadurch gekennzeichnet, dass** der Verdichter (4) ein Niederdruckverdichter ist und die Turbine (10) eine Niederdruckturbine ist, welche die Rotation des Niederdruckverdichters antreibt.

## Claims

1. System (40) for active control of radial play (44) in a turbomachine (2), the system (40) comprising:
- an annular row of rotor vanes (34);
- an outer casing (26) around the row of rotor vanes (34);
- a radial play (44) between the rotor vanes (34) and the outer casing (26); and
- an oil circuit (24) suitable for recovering the calories from turbomachine equipment and comprising an expansion module (46) configured in order to deform the outer casing (26) by means of the calories recovered from the oil,
**characterized in that**
the expansion module (46) is arranged inside the outer casing (26) so as to adapt the radial play (44).

2. System (40) according to claim 1, **characterized in that** the outer casing (26) comprises an annular wall with an inner surface, the module (46) comprising an expansion ring which is arranged radially against said inner surface.

3. System (40) according to either of claims 1 to 2, **characterized in that** the module (46) is arranged axially at the level of the annular row of rotor vanes (34).

4. System (40) according to one of claims 1 to 3, **characterized in that** the module (46) comprises a metal material, possibly a material that is different from the material of the outer casing, and/or the outer casing (26) comprises a composite material with organic matrix, and in particular glass fibres and/or carbon fibres.

5. System (40) according to one of claims 1 to 4, **characterized in that** the module (46) comprises, within its radial thickness, at least one duct (48).

6. System (40) according to one of claims 1 to 5, **characterized in that** the module (46) includes multiple ducts (48), for example at least four or at least eight ducts (48), which are provided in the radial thickness of the module (46) and are distributed axially along said module (46).

7. System (40) according to either of claims 5 to 6, **characterized in that** each duct (48) extends along the circumference of the annular row of rotor vanes (34).

8. System (40) according to one of claims 1 to 7, **characterized in that** the system additionally includes a layer of abradable material which is suitable to cooperate through abrasion with the row of rotor vanes (34), the module (46) being arranged radially between the outer casing (26) and the abradable layer.

9. System (40) according to one of claims 1 to 8, **characterized in that** the outer casing (26) includes at least one annular fixing flange (30) axially spaced apart from the expansion module (46), and possibly spaced apart from the row of rotor vanes (34).

10. Turbomachine (2), notably a turbine engine, comprising an annular row of rotor vanes (34) and a system (40) for active control of radial play (44) around the rotor vanes (34), **characterized in that** the system (40) for active control is according to one of claims 1 to 9, the turbomachine (2) preferably comprises a compressor (4), a fan (16), a turbine (10), a reduction gear (22) in engagement with the compressor (4) and/or with the fan (16), and at least one rotating bearing.

11. Turbomachine (2) according to claim 10, **characterized in that** the compressor (4) comprises at least two rows of stator vanes (36) between which is placed the row of rotor vanes (34), the expansion module (46) being arranged between the at least two rows of stator vanes (36), and/or the module (46) being axially spaced apart from each annular row of stator vanes (36).

12. Turbomachine (2) according to one of claims 10 to 11, **characterized in that** the outer casing (26) includes at least one first outer shroud (28) and one second outer shroud (28) which are connected to one another at a fixing interface (41), wherein at the interface (41) the second shroud (28) has an inner diameter that is greater than the outter diameter of the second shroud (28), the module (46) being arranged axially inside the second shroud (28).

13. Turbomachine (2) according to one of claims 10 to 12, **characterized in that** the reduction gear (22) is arranged axially at the level of the compressor (4), the compressor (4) possibly comprising an upstream separation spout (32), the reduction gear (22) possibly being arranged downstream of said separation spout (32).

14. Turbomachine (2) according to one of claims 10 to 13, **characterized in that** the reduction gear (22) is configured such that the rotating velocity of the turbine (10) is greater than or equal to twice the rotating velocity of the compressor (4).

15. Turbomachine (2) according to one of claims 10 to 14, **characterized in that** the compressor (4) is a low-pressure compressor, and the turbine (10) is a low-pressure turbine which drives the rotation of the low-pressure compressor.
